# EUROPEAN PATENT APPLICATION

(11) **EP 4 101 762 A1**
(43) Date of publication of application: **14.12.2022**
(21) Application number: 22175574.7
(22) Date of filing: 25.05.2022
(51) Int. Cl.: B64D 11/00, B64D 11/04, B64D 11/06

(54) **TRAPEZOIDAL CART STOWAGE FOR AIRCRAFT**

(30) Priority: 08.06.2021 US 202117342288
(71) Applicant: B/E Aerospace, Inc., Winston-Salem, NC 27105 (US)
(72) Inventor: NICOLATO, David D., Winston Salem, NC (US); DOWTY, Mark B., Rural Hall, NC (US); PENCE, Tracy, King, NC (US); McKEE, Jefferey M., Duvall, WA (US); PHILLIPS, Thomas L., Winston Salem, NC (US)
(74) Representative: Dehns

(57) **Abstract**

An aircraft interior structure (104) for an aircraft cabin (100) may include a main body (105) with a plurality of walls, where at least one wall of the plurality of walls may be shared with an adjacent passenger suite including an aircraft seat (204). The passenger suite may be installed at an angle relative to an aisle of the aircraft cabin. The aircraft interior structure may include a cavity (114) defined within the main body. The cavity may be a trapezoidal shape defined at least in part by the angle at which the passenger suite is installed in the aircraft cabin. The cavity may be configured to receive a plurality of galley carts (306). A length of each of the plurality of galley carts may be dependent on a depth of the cavity at respective locations in the trapezoidal shape.

## Description

### BACKGROUND

Aircraft cabin designs may include aircraft interior structures that are separately-constructed and separately-installed within the aircraft cabin. The separate nature of the aircraft interior structures may result in a loss of valuable space (e.g., floor space, stowage space, or the like) within the aircraft cabin. However, the aircraft cabin designs need to address competing interests for aircraft interior structures such as increased passenger seating, storage space, lavatories, and/or galley spaces in the aircraft cabin.

### SUMMARY

An aircraft interior structure for an aircraft cabin is disclosed, in accordance with one or more embodiments. The aircraft interior structure may include a main body with a plurality of walls. At least one wall of the plurality of walls may be shared with an adjacent passenger suite including an aircraft seat configured to actuate between an upright position and a lie-flat position installed in the aircraft cabin. The passenger suite may be installed at an angle relative to an aisle of the aircraft cabin. The passenger suite may be accessible via an opening to the aisle. The aircraft interior structure may include a cavity defined within the main body. The cavity may be a trapezoidal shape defined at least in part by the angle at which the passenger suite is installed in the aircraft cabin. The cavity may be configured to receive a plurality of galley carts. A length of each of the plurality of galley carts may be dependent on a depth of the cavity at respective locations in the trapezoidal shape where each of the plurality of galley carts is housed.

In some embodiments, the plurality of galley carts may include at least one large galley cart with a first length configured to be inserted at a location in the cavity corresponding to a deep portion of the trapezoidal shape of the cavity. The plurality of galley carts may include at least one small galley cart with a second length configured to be inserted at a location in the cavity corresponding to a shallow portion of the trapezoidal shape of the cavity.

In some embodiments, the at least one galley cart may be configured to be inserted into the cavity in a direction at least one of parallel to a direction of travel of the aisle, at an angle to the direction of travel of the aisle, or perpendicular to the direction of travel of the aisle.

In some embodiments, the aircraft interior structure may include one or more doors configured to separate the cavity from the aircraft cabin.

In some embodiments, the cavity may be accessible via a galley area in the aircraft cabin. At least some of the plurality of galley carts may be insertable into the cavity via a galley area. The one or more doors may be configured to separate the cavity from the galley area when closed.

In some embodiments, the cavity may be accessible via the aisle. At least some of the plurality of galley carts may be insertable into the cavity via the aisle. The one or more doors may be configured to separate the cavity from the aisle when closed.

In some embodiments, the aircraft interior structure may include a chiller system at least partially installed within the cavity. The chiller system may include an air chiller coupled to ductwork.

In some embodiments, the chiller system may include one or more ports coupled to the ductwork. The one or more ports may be configured to feed chilled air through at least some of the plurality of galley carts housed in the cavity.

In some embodiments, the chiller system may include one or more vents coupled to the ductwork. The one or more vents may be configured to feed chilled air over at least some of the plurality of galley carts housed in the cavity.

In some embodiments, the cavity may be configured to stow large items including wheelchairs, bassinets, safety equipment, hangable items, or luggage.

In some embodiments, the aircraft interior structure may include a workdeck and a raised edge proximate to the passenger suite. The raised edge may be configured to allow a passenger to have access to the workdeck. The workdeck may be configured to support at least one of a bassinet or luggage proximate to the passenger suite and the raised edge.

An aircraft cabin is disclosed, in accordance with one or more embodiments. The aircraft cabin may include a passenger suite with an aircraft seat configured to actuate between an upright position and a lie-flat position. The passenger suite may be installed at an angle relative to an aisle of the aircraft cabin. The passenger suite may be accessible via an opening to the aisle. The aircraft cabin may include an aircraft interior structure adjacent to the passenger suite. The aircraft interior structure may include a main body including a plurality of walls. At least one wall of the plurality of walls may be shared with the adjacent passenger suite. The aircraft interior structure may include a cavity defined within the main body. The cavity may be a trapezoidal shape defined at least in part by the angle at which the passenger suite is installed in the aircraft cabin. The cavity may be configured to receive a plurality of galley carts. A length of each of the plurality of galley carts may be dependent on a depth of the cavity at respective locations in the trapezoidal shape where each of the plurality of galley carts is housed.

In some embodiments, the aircraft interior structure may be installed forward of the adjacent passenger suite. The at least one wall may form a forward surface of the adjacent passenger suite.

In some embodiments, the aircraft interior structure may be installed aft of the adjacent passenger suite. The at least one wall may form a rearward surface of the adjacent passenger suite.

In some embodiments, the aircraft cabin may include a second passenger suite with a second aircraft seat configured to actuate between a second upright position and a second lie-flat position. The second passenger suite may be installed at a second angle relative to the aisle of the aircraft cabin. The second passenger suite may be accessible via a second opening to the aisle. The aircraft cabin may include a second aircraft interior structure adjacent to the second passenger suite. The second aircraft interior structure may include a second main body including a second plurality of walls. At least one wall of the second plurality of walls may be shared with the adjacent second passenger suite. The second aircraft interior structure may include a second cavity defined within the second main body. The second cavity may be a second trapezoidal shape defined at least in part by the angle at which the second passenger suite is installed in the aircraft cabin. The second cavity may be configured to receive a second plurality of galley carts. A length of each of the second plurality of galley carts may be dependent on a depth of the second cavity at respective locations in the second trapezoidal shape where each of the second plurality of galley carts is housed. The passenger suite and the aircraft interior structure may be on a first side of the aisle and the second passenger suite and the second aircraft interior structure may be on a second side of the aisle. The passenger suite and the second passenger suite may be angled inward to the aisle.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a plan view of a portion of an aircraft cabin including a trapezoidal cart stowage, in accordance with one or more embodiments;
FIG. 1B illustrates a plan view of a portion of an aircraft cabin including a trapezoidal cart stowage, in accordance with one or more embodiments;
FIG. 2 illustrates a plan view of a portion of an aircraft cabin including a trapezoidal cart stowage, in accordance with one or more embodiments;
FIG. 3A illustrates a perspective view of a portion of an aircraft cabin including a trapezoidal cart stowage, in accordance with one or more embodiments;
FIG. 3B illustrates a perspective view of a portion of an aircraft cabin including a trapezoidal cart stowage, in accordance with one or more embodiments;
FIG. 3C illustrates a plan view of a portion of an aircraft cabin including a trapezoidal cart stowage, in accordance with one or more embodiments;
FIG. 3D illustrates a perspective view of a portion of an aircraft cabin including a trapezoidal cart stowage, in accordance with one or more embodiments;
FIG. 3E illustrates a plan view of a portion of an aircraft cabin including a trapezoidal cart stowage, in accordance with one or more embodiments;
FIG. 3F illustrates a perspective view of a portion of an aircraft cabin including a trapezoidal cart stowage, in accordance with one or more embodiments;
FIG. 3G illustrates a perspective view of a portion of an aircraft cabin including a trapezoidal cart stowage, in accordance with one or more embodiments;
FIG. 3H illustrates a plan view of a portion of an aircraft cabin including a trapezoidal cart stowage, in accordance with one or more embodiments;
FIG. 4A illustrates a perspective view of a portion of an aircraft cabin including a trapezoidal cart stowage, in accordance with one or more embodiments;
FIG. 4B illustrates a perspective view of a portion of an aircraft cabin including a trapezoidal cart stowage, in accordance with one or more embodiments;
FIG. 4C illustrates a perspective view of a portion of an aircraft cabin including a trapezoidal cart stowage, in accordance with one or more embodiments;
FIG. 4D illustrates a perspective view of a portion of an aircraft cabin including a trapezoidal cart stowage, in accordance with one or more embodiments;
FIG. 5A illustrates a plan view of a portion of an aircraft cabin including a trapezoidal cart stowage, in accordance with one or more embodiments;
FIG. 5B illustrates a plan view of a portion of an aircraft cabin including a trapezoidal cart stowage, in accordance with one or more embodiments;
FIG. 6A illustrates a plan view of a portion of an aircraft cabin including a trapezoidal cart stowage, in accordance with one or more embodiments;
FIG. 6B illustrates a perspective view of a portion of an aircraft cabin including a trapezoidal cart stowage, in accordance with one or more embodiments; and
FIG. 6C illustrates a plan view of a portion of an aircraft cabin including a trapezoidal cart stowage, in accordance with one or more embodiments.

### DETAILED DESCRIPTION OF THE INVENTION

Reference will now be made in detail to the subject matter disclosed, which is illustrated in the accompanying drawings.

Before explaining one or more embodiments in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

Aircraft cabin designs may include aircraft interior structures that are separately-constructed and separately-installed within the aircraft cabin. For example, the aircraft cabin may include one or more business class or first-class passenger compartments or passenger suites. By way of another example, the aircraft cabin may include an interior structure configured to operate as a galley around which crew members may prepare items for passengers and/or a galley stowage area in which crew members may stow or retrieve items. It is noted herein a "crew member" may be considered any crew member on an aircraft (e.g., cabin attendant or flight attendant, pilot, co-pilot, or the like), for purposes of the present disclosure.

The separate nature of the aircraft interior structures may result in a loss of valuable space (e.g., floor space, stowage space, or the like) within the aircraft cabin. However, the aircraft cabin designs need to address competing interests for aircraft interior structures such as increased passenger seating, storage space, lavatories, and/or galley spaces in the aircraft cabin. For example, arranging the layout of an aircraft cabin in order to increase passenger seating may require reducing an amount of room used for storage space, lavatories, galley spaces, and other structures and/or monuments. For instance, this reducing the amount of room used may include modifying the arrangement and/or design of components including, but not limited to, a galley, an aircraft lavatory, or other structures and/or monuments of the aircraft passenger cabin.

When modifying an aircraft cabin design to allow for a more compact arrangement, load-bearing/weight-bearing requirements must be met without losing the intended functionality of the structures and/or monuments in the aircraft cabin. For example, the structures and/or monuments in the aircraft cabin may need to be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

Embodiments are directed to a trapezoidal cart stowage for aircraft. Embodiments are also directed to integrating the trapezoidal cart stowage with a portion of a passenger compartment or passenger suite installed within the aircraft cabin, where the integrating of various aircraft interior components may reduce required installation space, resulting in an increase of available floor space for other aircraft interior structures and/or monuments while continuing to meet aviation guidelines and/or standards. Embodiments are also directed to a chiller system within the trapezoidal cart stowage. Embodiments are also directed to stowage of large items within the trapezoidal cart stowage.

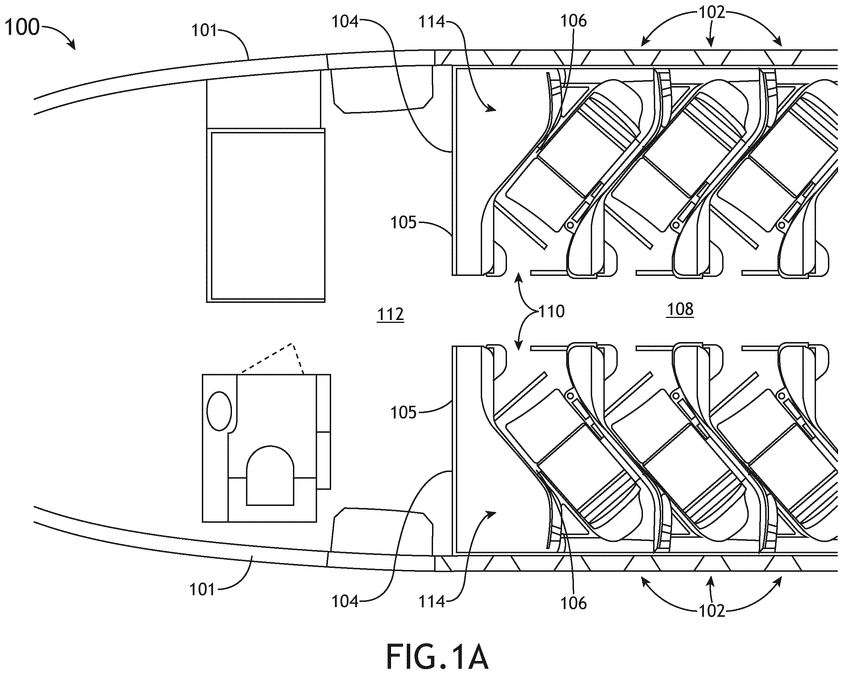

FIGS. 1A-6C generally illustrate a trapezoidal cart storage for aircraft, in accordance with one or more embodiments.

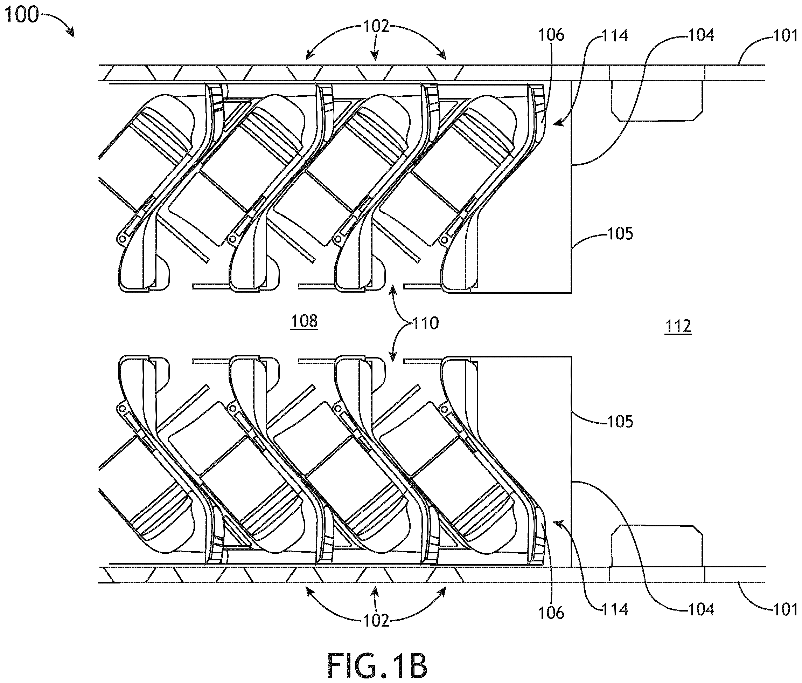

Referring now to at least FIGS. 1A and 1B, an aircraft cabin 100 in a fuselage 101 may include a plurality of passenger suites 102. The plurality of passenger suites 102 may be angled within the aircraft cabin 100. For example, the plurality of passenger suites 102 may be angled with the passenger facing forward. For instance, at least some of the plurality of passenger suites 102 may be angled such that the passenger may face forward and inward (e.g., inboard). In addition or in the alterative, at least some of the plurality of passenger suites 102 may be angled such that the passenger may face forward and outward (e.g., outboard).

The aircraft cabin 100 may include one or more aircraft interior structures 104 proximate to the plurality of passenger suites 102. An aircraft interior structure 104 may include a main body 105 fabricated from walls. The main body 105 and an adjacent passenger suite 102 may share one or more walls.

As illustrated in FIG. 1A, a wall 106 of the main body 105 may form a forward surface in the proximate passenger suite 102, where the aircraft interior structure 104 is installed within the front of the aircraft cabin 100. As illustrated in FIG. 1B, the wall 106 of the main body 105 may form a rearward surface in the proximate passenger suite 102, where the aircraft interior structure 104 is installed within the rear or aft of the aircraft cabin 100. It is noted herein, however, the designation of "forward" and "rearward" is dependent on the orientation of the passenger suite 102 within the aircraft cabin 100. For example, the above designations may be appropriate where the plurality of passenger suites 102 are angled forward and inward (e.g., inboard), but may be reversed where the plurality of passenger suites 102 are angled forward and outward (e.g., outboard). Therefore, the above description should not be interpreted as a limitation on the scope of the claims but merely an illustration.

The plurality of passenger suites 102 and the one or more aircraft interior structures 104 may be separated by a single separating aisle 108. Portions of the plurality of passenger suites 102 may be accessible via the aisle 108 through an opening 110 in each of the plurality of passenger suites 102, where the opening 110 opens into the aisle 108. It is noted herein openings 110 of across-aisle passenger suites 102 may be opposite one another. In addition, it is noted herein openings 110 of across-aisle passenger suites 102 may be offset from one another. Further, it is noted herein at least some of the plurality of passenger suites 102 and the one or more aircraft interior structures 104 may be understood as being positioned within the aircraft cabin 100 between the aisle 108 and the fuselage 101 including the aircraft cabin 100.

The aisle 108 may lead to a galley area 112. Portions of the one or more aircraft interior structures 104 including, but not limited to, a cavity 114 defined within the main body 105 may be accessible via the galley area 112.

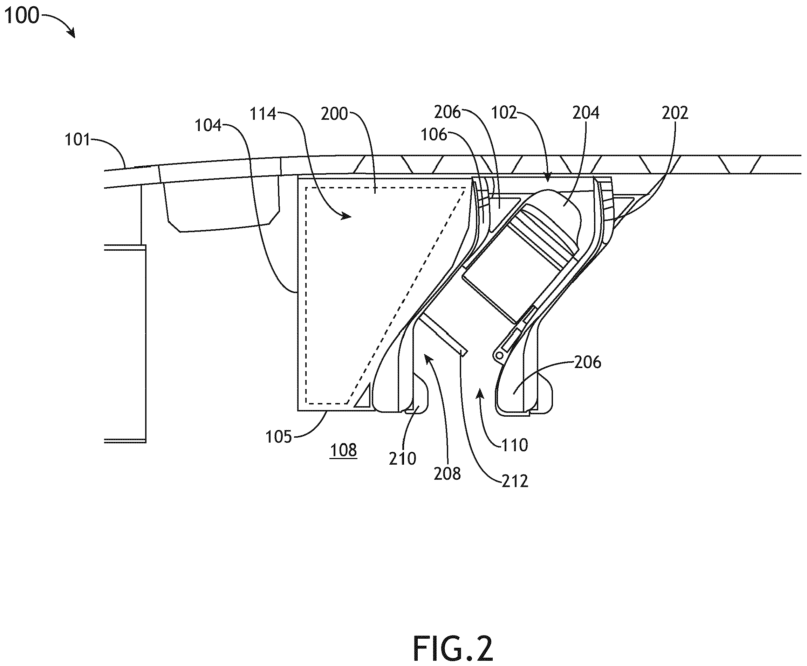

Referring now to at least FIG. 2, the cavity 114 of the one or more aircraft interior structures 104 (and thus the shape of the one or more aircraft interior structures 104) may be trapezoidal (or substantially trapezoidal) in shape when viewed from above, as indicated by a broken line 200. In one non-limiting example, the trapezoidal (or substantially trapezoidal) shape may be defined in part by at least the angling of the plurality of passenger suites 102, the aisle 108, a length of the fuselage 101 of the aircraft cabin 100, and the galley area 112.

It is noted herein the angling of the plurality of passenger suites 102 may cause space in the aircraft cabin 100 to be non-utilized or under-utilized if the galleys and/or stowage areas are standard (e.g., rectangular or substantially rectangular). However, although embodiments are directed to a trapezoidal cross-section 200, it is noted herein an aircraft interior structure 104 may include a cavity 114 that is a shape other than trapezoidal (or substantially trapezoidal), to the extent the shape does not conflict with the placement of the aircraft interior structure 104 proximate to a passenger suite 102 and proximate to the aisle 108 and galley area 112. In this regard, it is contemplated the shape of the cavity 114 (and thus the aircraft interior structure 104) may be dependent on the arrangement and/or shape of the passenger suites 102.

The one or more passenger suites 102 may include a suite wall 202 with one or more suite wall elements. For example, the wall 106 of the aircraft interior structure 104 may be considered a suite wall element of the suite wall 202. By way of another example, at least some of the one or more suite wall elements of the suite wall 202 may be shared between adjacent passenger suites 102.

The one or more passenger suites 102 may each include an aircraft seat 204 (e.g., a business class or first-class passenger seat). It is noted herein the terms "aircraft seat" and "passenger seat" may be considered equivalent, for purposes of the disclosure.

The aircraft seat 204 may include, but are not limited to, some combination of seat pans, seat backs, headrests, seat cushions, diaphragms, dress covers, legs, support members, actuatable armrests, seatbelts, or the like. The one or more aircraft seats 204 may be attachable to embedded seat tracks located in a floor of the aircraft cabin 100 via conventional track fasteners and/or be couplable to the passenger suite 102 (e.g., where the passenger suite 102 may be attachable to embedded seat tracks located in the floor of the aircraft cabin 100 via conventional track fasteners).

An aircraft seat 204 may be rotatable about an axis (e.g., swivelable). The aircraft seat 204 may be fully positionable between the outer limits of motion as defined by the moveable components of the aircraft seat 204 and/or one or more monuments 206 of the passenger suite 102. It is noted herein an upright or raised position may be considered a taxi, takeoff, or landing (TTL) position during select stages of flight (though the upright or raised position is not limited to use during the select stages of flight as the TTL position, but also may be used at any point during the flight), for purposes of the present disclosure. In addition, it is noted herein that any position that does not meet the above-defined requirements of the TTL position may be considered a non-TTL position, for purposes of the present disclosure. Further, it is noted herein the aircraft seat 204 may be actuatable (e.g., translatable and/or rotatable) from the TTL position to a non-TTL position, and/or vice versa. Further, it is noted herein the aircraft seat 204 may be capable of a fully upright or raised position, and that the TTL position may have a more reclined seat back cushion and a more angled upward seat pan cushion as compared to the fully upright or raised position. Therefore, the above description should not be interpreted as a limitation on the present disclosure but merely an illustration.

In general, the aircraft seat 204 may be translatable (e.g., trackable or slidable). The aircraft seat 204 may be rotatable about an axis cross-wise through the aircraft seat 204 into a position including, but not limited to, an upright or raised position, one or more lounge or reclined positions, and a lie-flat or bed position. For example, the aircraft seat 204 may transition directly between the upright or raised position and the lie-flat or bed position. By way of another example, it is noted herein the aircraft seat 204 may transition through one or more lounge or reclined positions between the upright or raised position and the lie-flat or bed position. By way of another example, the aircraft seat 204 may transition into one or more lounge reclined positions in a motion separate from the transition between the upright or raised position and the lie-flat or bed position. Therefore, the above description should not be interpreted as a limitation on the scope of the claims but merely an illustration.

The aircraft seat 204 may be configured to avoid contact with the one or more monuments 206 when transitioning between positions (e.g., between the upright or raised position and the lie-flat or bed position). It is noted herein that at least some components (e.g., the suite wall 202 with one or more suite wall elements such as the wall 106, the one or more monuments 206, or the like) may conform to a portion of an aircraft seat 204. In this regard, the amount of floor area of the aircraft cabin 100 necessary for the one or more aircraft seats 204 may be reduced.

The one or more monuments 206 may include, but are not limited to, a structure with a horizontal (or substantially horizontal) surface such as a tray or table, a side stand, or the like. The structure may include a top surface, a bottom surface, and/or one or more side surfaces. For example, a structure may include a single continuous side surface where all corners are rounded. By way of another example, the structure may include up to an N number of side surfaces where the auxiliary monument includes up to an N number of corners. The structure may be actuatable (e.g., may extend a select distance from a stored position to an extended position proximate to a passenger, similar to an aircraft tray table). It is noted herein, however, that the structure may be fixed in position.

The passenger suite 102 and/or the one or more monuments 206 may include a defined cavity for use as a storage compartment.

For example, the storage compartment may be configured to receive and hold (e.g., contain, secure, or the like) one or more passenger amenities including, but not limited to, paper-printed materials (e.g., magazines, newspapers, pamphlets, or the like), select personal electronic devices (e.g., phones, tablets, phablets, laptops, music devices, digital video disc (DVD) players, handheld gaming consoles or devices, or the like), food products, drink products, or the like.

By way of another example, the storage compartment may include one or more electronic connections for one or more passenger amenities such as, but not limited to, one or more charging ports, one or more charging cables, or the like.

By way of another example, the storage compartment may include one or more electronic connections in communication with one or more components of the passenger suite 102 such as, but not limited to, one or more display device connection ports, one or more display device connection cables, one or more audio output jacks (e.g., headphone jacks), one or more audio input jacks, or the like. At least some of the one or more storage compartments may include one or more safety devices (e.g., air masks, personal floatation devices, or the like).

The storage compartment may include one or more shelves and/or a door. For example, the door may be fully-opaque or solid. By way of another example, the door may be at least partially fabricated from a transparent material (e.g., glass, plastic, or the like) or include a patterned or unpatterned set of cut-outs configured or designed to meet aviation guidelines and/or standards.

The one or more passenger suites 102 may include an footwell 208. For example, the footwell 208 may be defined within the suite wall 202 (e.g., defined within the wall 106 or another suite wall element of the suite wall 202). By way of another example, the footwell 208 may be defined within or under a monument 206. A passenger suite 102 may be configured with the footwell 208 positioned within the passenger suite 102 proximate to the opening 110 of the passenger suite 102, such that one walks past the footwell 208 prior to reaching the aircraft seat 204. It is noted herein, however, the passenger suite 102 may be configured such that the opening 110 of the passenger suite 102 is positioned between the footwell 208 and the aircraft seat 204.

The one or more passenger suites 102 may include an ottoman 210. The passenger suite 102 may include an ottoman 210 within the footwell 208. The ottoman 210 may be usable by a passenger in the aircraft seat 204 when the corresponding aircraft seat 204 is in the upright or raised position, the one or more reclined or lounge positions, and/or the lie-flat or bed position. For example, the ottoman 210 may form a portion of a bed surface when the corresponding aircraft seat 204 is in the lie-flat or bed position. The ottoman 210 may be usable by a passenger in an aircraft seat 204 positioned proximate to the passenger suite 102 when the corresponding aircraft seat 204 is in a reclined or lounge position.

The ottoman 210 may be configured to translate and/or rotate about an axis through a sidewall of the ottoman 210 to direct a top surface to a passenger occupying the aircraft seat 204. For example, where the ottoman 210 may be configured to both translate and rotate, the ottoman 210 may be configured to independently rotate and/or translate. By way of another example, where the ottoman 210 may be configured to both translate and rotate, a rotation may prevent further translation until the ottoman 210 is returned to a select position and/or a translation may prevent further rotation until the ottoman 210 is returned to a select position.

One or more dimensions of the footwell 208 may be changed by transitioning the aircraft seat 204 between the upright or raised position, the one or more lounge or reclined positions, and the lie-flat or bed position. It is noted herein that a portion of the ottoman 210 may be actuatable (e.g., along a set of tracks or linear rails) to a position outside of the footwell 208.

It is noted herein, however, the aircraft seat 204 and/or the ottoman 210 may be limited to an upright or raised position and/or one or more lounge or reclined positions. In addition, it is noted herein the aircraft seat 204 may be the sole component forming a bed when the aircraft seat 204 is in a lie-flat or bed position. Therefore, the above description should not be interpreted as a limitation on the present claims but merely an illustration.

Due to the trapezoidal shape of the cavity 114 and depending on the arrangement of the one or more passenger suites 102 in the aircraft cabin 100, components of at least some of the one or more passenger suites 102 (e.g., at least the aircraft seat 204, the footwell 208, and the ottoman 210) may be angled forward and inward (e.g., inboard), or angled forward and outward (e.g., outboard). It is noted herein, however, the arrangement of the plurality of passenger suites 102 in the aircraft cabin 100 around a single separating aisle 108 should not be considered a V configuration, due to the separation aisle 108 of the footwell 208 and the ottoman 210 of cross-aisle passenger suites 102.

The passenger suite 102 may include one or more accessories.

The one or more accessories may include one or more installed passenger amenities. For example, the one or more installed passenger amenities may include one or more lights, one or more vents, one or more aircraft seat 204 actuation devices (e.g., controls, or the like), one or more air flow or temperature control devices, or the like coupled to and/or partially inset in the one or more suite wall elements of the suite wall 202 or other locations within the passenger suite 102.

The one or more accessories may include one or more electronics or electronic devices. For example, the one or more electronics or electronic devices may include, but are not limited to, in-flight entertainment (IFE) devices 212 attached to a vertical (or substantially vertical) surface, one or more speakers configured to provide media content separate from the media content shown on the one or more IFE devices 212 and/or accompanying the media content shown on the one or more IFE devices 212, or the like. For instance, the surface may be formed by the positioning of the wall 106 (e.g., the forward surface, the rearward surface, or the like). It is noted herein, however, the one or more IFE devices 212 may be coupled to other monuments (e.g., in an actuatable position or a fixed position) within the aircraft cabin 100. In addition, it is noted herein, the one or more IFE devices 212 may be fixed in position or may be movable from a stowed position to one or more viewing positions via actuation in one or more translational directions and/or one or more rotational directions.

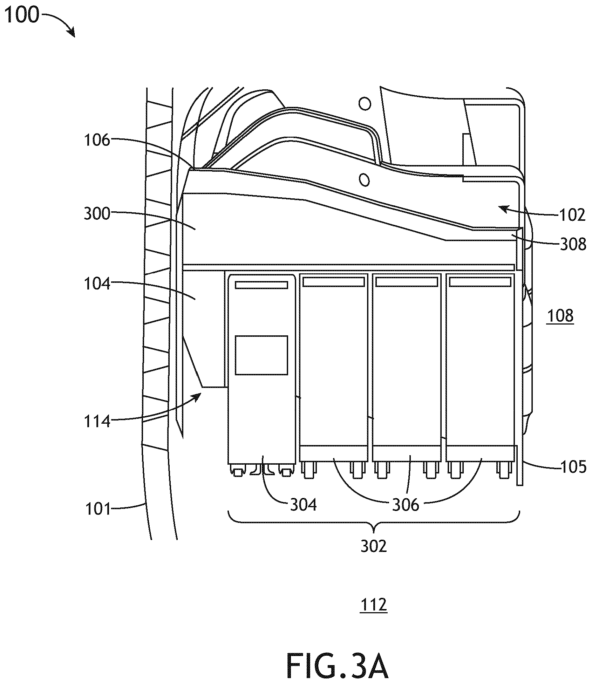

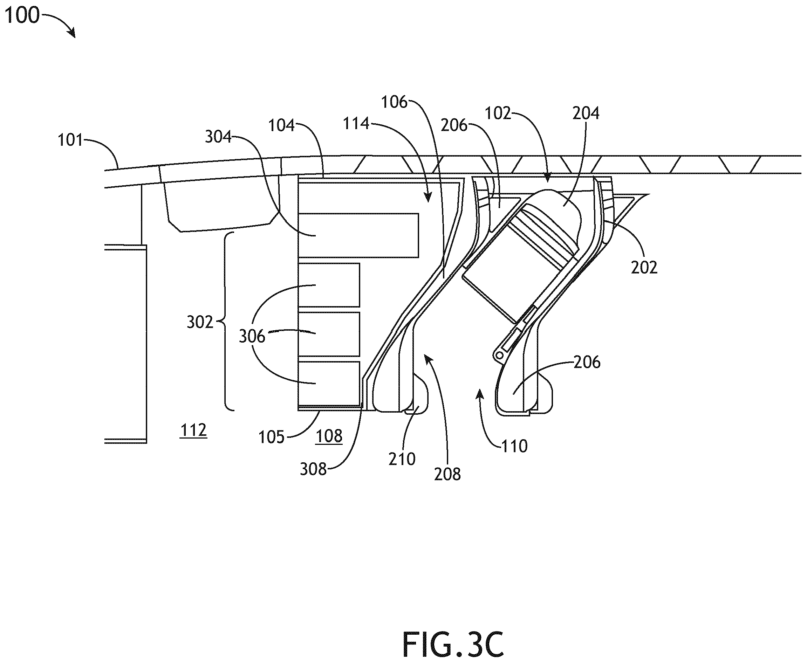

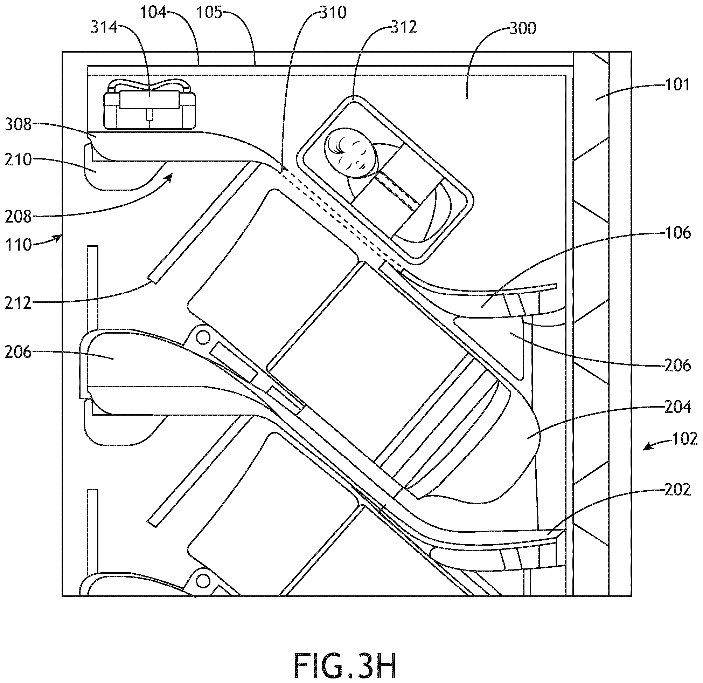

Referring now to at least FIGS. 3A-3H, the one or more aircraft interior structures 104 may include a workdeck 300. For example, the workdeck 300 may be integrated with the main body 105 or installed in the main body 105. By way of another example, the workdeck 300 may define a top boundary of the cavity 114. The workdeck 300 may be a preparation area on which crew members may prepare galley items. The workdeck 300 may include one or more galley inserts. The workdeck 300 may include one or more galley storage units or containers. By way of another example, the workdeck 300 may include a combination of preparation area, galley inserts, and galley storage units or containers.

The cavity 114 may be configured to receive one or more galley carts 302. For example, the cavity 114 may be configured to receive one or more large galley carts 304. For instance, the large galley carts 304 may include, but are not limited to, full-size galley carts. By way of example, the cavity 114 may be configured to receive one or more small galley carts 306. In addition, the small galley carts 306 may include, but are not limited to, half-size galley carts. By way of another example, the cavity 114 may be configured to receive a combination of one or more large galley carts 304 and one or more small galley carts 306. It is noted herein the terms "galley cart" and "trolley" (and respective variants of the terms "galley cart" and "trolley" such as "large galley cart" and "large trolley, "small galley cart" and "small trolley", or the like) may be considered equivalent, for purposes of the present disclosure.

The aircraft interior structure 104 may include one or more cart interlocking assemblies or mechanisms configured to hold the one or more galley carts 302 in place within the cavity 114. In one non-limiting example, the one or more cart interlocking assemblies or mechanisms may be configured to hold the one or more galley carts 302 in the cavity 114 during TTL stages of flight.

The size and/or length of galley cart 302 receivable by the cavity 114 may be dependent on the shape and/or depth of the cavity 114 at a particular location in the cavity 114. For example, where the cavity 114 is trapezoidal (or substantially trapezoidal) in shape when viewed from above, as indicated by a broken line 200, the deep portion of the cavity 114 may be configured to receive large galley carts 304 and the shallow portion of the cavity may be configured to receive small galley carts 306, where the deep portion of the cavity 114 is of a greater depth than the shallow portion of the cavity 114. In general, the one or more galley carts 302 may be inserted into the cavity 114 at any angle relative to the aisle 108.

As illustrated in at least FIGS. 3A-3C, galley carts 302 may be inserted into the cavity 114 parallel (or substantially parallel) to the direction of travel of the aisle 108. For instance, depending on the shape of the cavity 114 / the aircraft interior structure 104, the insertion of the one or more galley carts 302 into the cavity 114 parallel (or substantially parallel) to the direction of travel of the aisle 108 may allow for at least one large galley cart 304 and at least two small galley carts 306. It is noted herein the galley carts 302 may be held in place with interlocking assemblies or mechanisms, and released in a standard formation into the galley area 112, when arranged as illustrated in FIGS. 3A-3C.

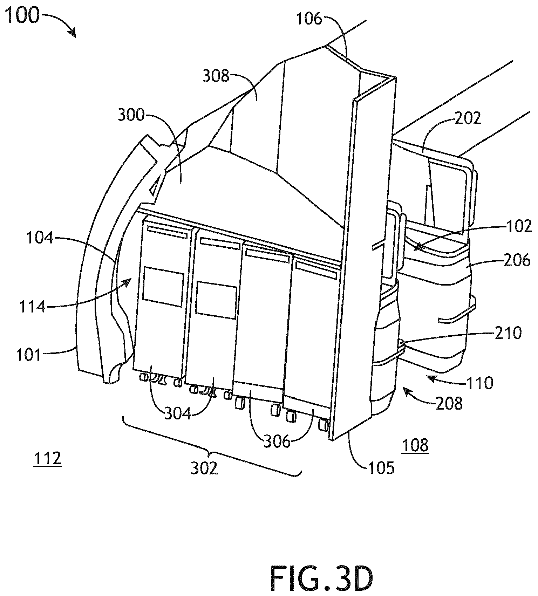

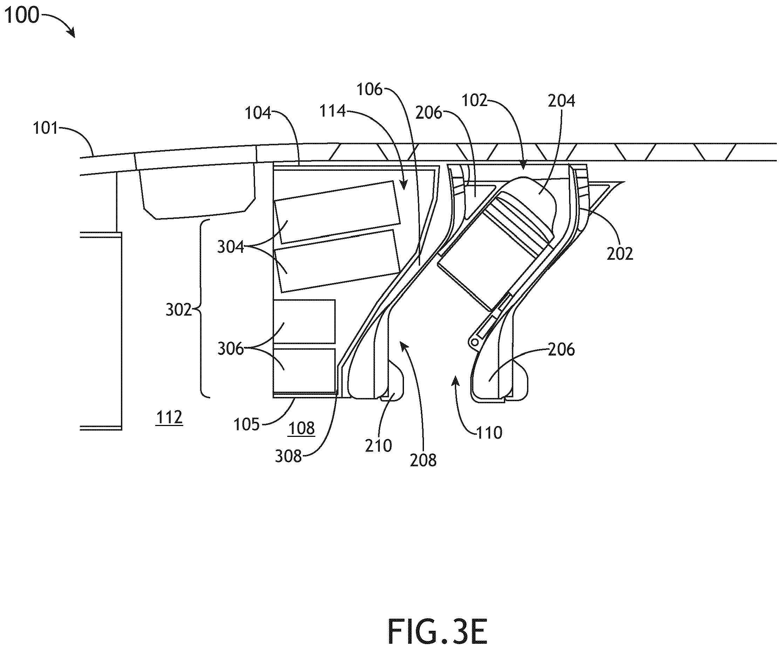

As illustrated in at least FIGS. 3D and 3E, at least some of the galley carts 302 may be inserted at an angle relative to direction of travel of the aisle 108. For instance, depending on the shape of the cavity 114 / the aircraft interior structure 104, the insertion of the one or more galley carts 302 at an angle to the direction of travel of the aisle 108 may allow for at least two large galley carts 304 and at least two small galley carts 306. It is noted herein the galley carts 302 may be held in place with interlocking assemblies or mechanisms, and related into the galley area 112, when arranged as illustrated in FIGS. 3D and 3E.

The aircraft interior structure 104 may include a raised edge 308 configured to separate the workdeck 300 from the adjacent passenger suite 102. For example, the raised edge 308 may be integrated with the wall 106. By way of another example, the raised edge 308 may be an extension of the wall 106. For instance, the raised edge 308 may be coupled to the wall 106 when in use, but removable and storable when not in use.

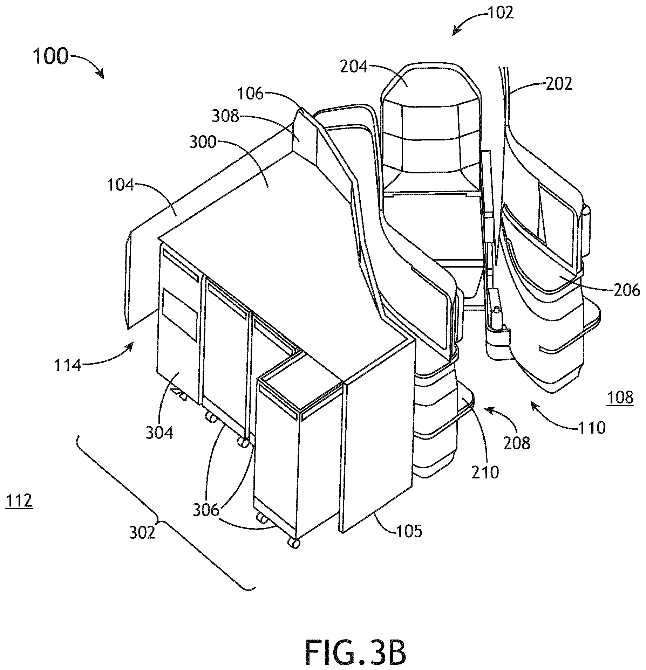

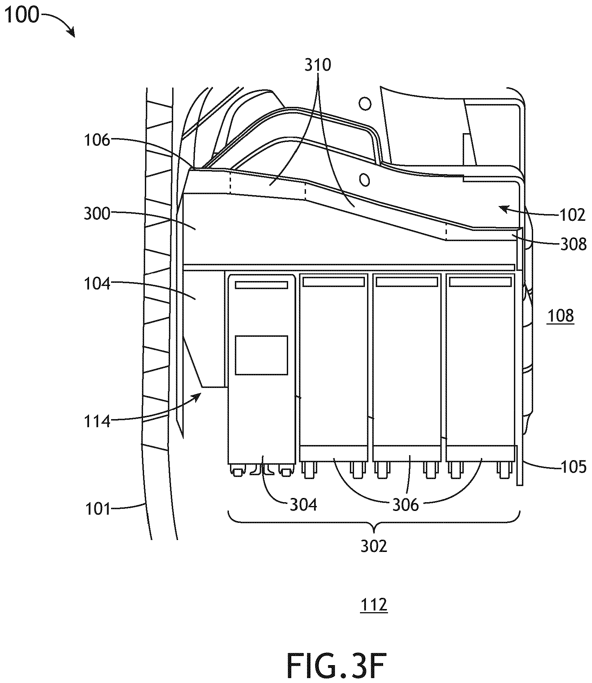

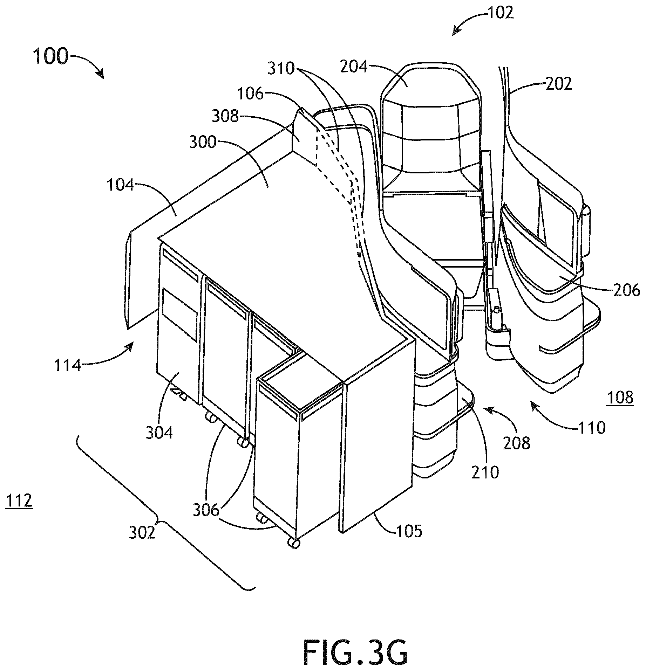

The raised edge 308 may have a partial height (e.g., only a portion of the distance between the workdeck 300 and the ceiling of or overhead storage bins installed within the fuselage 101, as illustrated in at least FIGS. 3A, 3B, 3F, and 3G) or a full height (e.g., the entire distance between the workdeck 300 and the ceiling of or overhead storage bins installed within the fuselage 101, as illustrated in FIG. 3D).

As illustrated in FIGS. 3F-3H, the raised edge 308 may include one or more sections 310. The one or more sections may have a single height. It is noted herein, however, that at least some of the one or more sections 310 may have a reduced height (e.g., to allow for ease of reach-over by the passenger).

The one or more sections 310 may be non-movable. The raised edge 308 may include one or more actuatable sections 310 in addition to the one or more non-movable sections 310. For example, the one or more actuatable sections 310 may be removable, translatable (e.g., raised or lowered), rotatable, or some combination or translatable and rotatable. For instance, the one or more actuatable sections 310 may be translatable along and/or rotatable about an axis parallel (or substantially parallel) to a plane defined by the workdeck 300, translatable along and/or rotatable about an axis perpendicular (or substantially perpendicular) to the plane defined by the workdeck 300, or translatable along and/or rotatable about an axis set at an angle between parallel and perpendicular to the plane defined by the workdeck 300).

The one or more actuatable sections 310 may be positioned in the raised edge 308 proximate to the aircraft seat 204 in the passenger suite 102 and/or the footpath area in the passenger suite 102 (e.g., where a passenger may stand in between the aircraft seat 204 and the footwell 208 and/or the ottoman 210). Due at least in part to the trapezoidal design of the aircraft interior structure 104 (and thus the workdeck 300), the passenger may be able to store or set items on at least a portion of the workdeck 300, which may be accessed via the one or more actuatable sections 310 of the raised edge 308. For example, the passenger may set a bassinet 312 on the workdeck 300 to access the bassinet 312 and its occupant periodically throughout a flight. By way of another example, the passenger may set carry-on luggage 314 on the workdeck 300 to access the carry-on luggage 314 periodically throughout the flight. It is noted herein the workdeck 300 (and/or the aircraft interior structure 104, as a whole) may include any necessary components to secure items including, but not limited to, the bassinet 312, the carry-on luggage 314, or the like to or on the workdeck 300 for the duration of the flight.

It is noted herein both the passenger and crew members may access the workdeck 300 (e.g., the passenger from the raised edge 308, and the crew members from the galley area 112). In addition, it is noted herein only either the passenger or crew members may access the workdeck 300, depending on the configuration of the aircraft interior structure 104. Further, it is noted herein the aircraft interior structure 104 may include multiple raised edges 108.

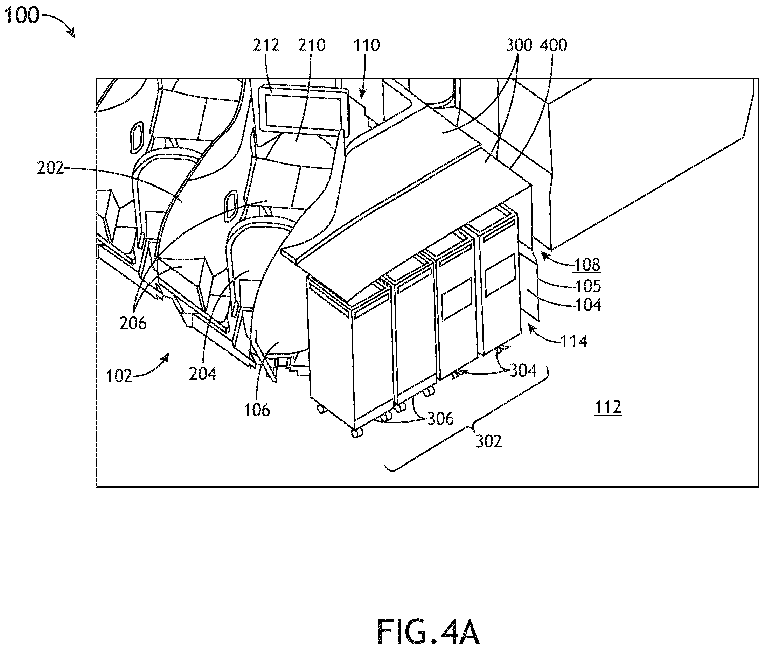

Referring now to at least FIGS. 4A-4D, the number of galley carts 302 that may be inserted in the cavity 114 may be dependent on a depth of the cavity 114.

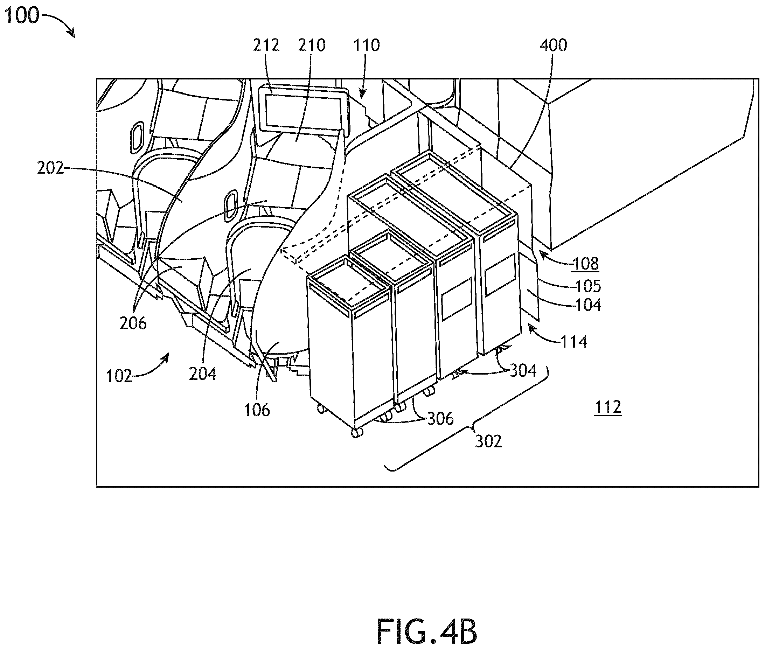

As illustrated in FIGS. 4A and 4B, the aircraft interior structure 104 may include an extension section 400 proximate to the main body 105. For example, the extension section 400 may be permanently installed in the galley area 112 and coupled to the main body 105. By way of another example, the extension section 400 may be collapsible or stowable in the cavity 114. For instance, the extension section 400 may be shorter and narrower than the height and width of the cavity 114, such that the extension section 400 may be folded or pushed into the cavity 114.

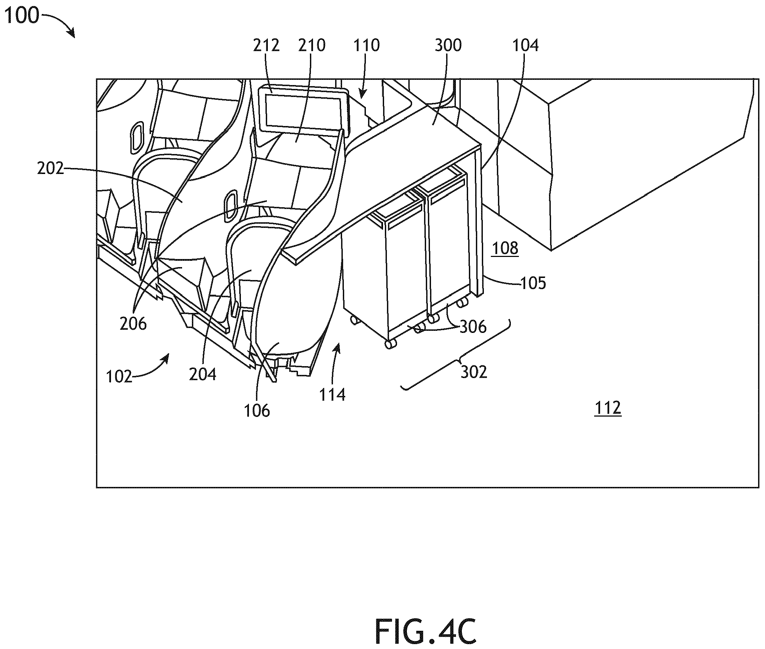

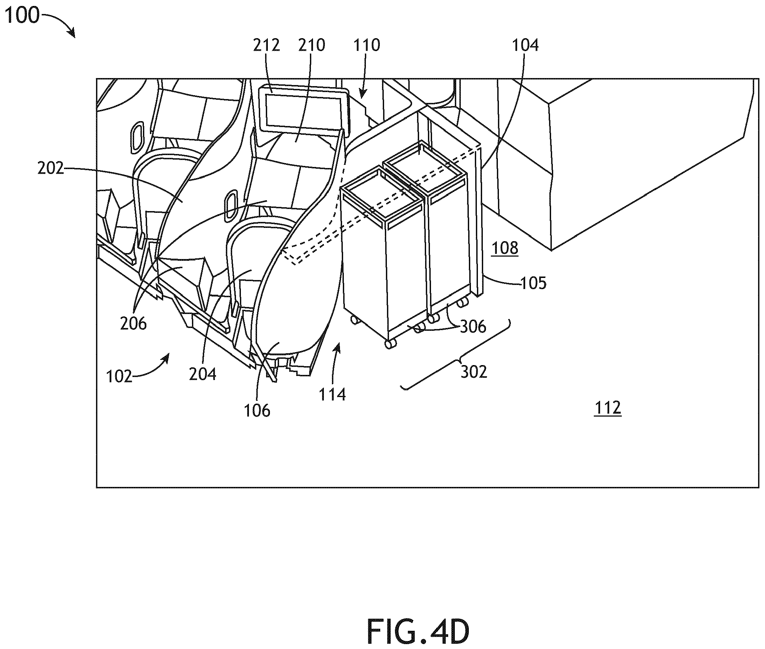

As illustrated in FIGS. 4C and 4D, the cavity 114 is only of a depth such that the cavity 114 may only store small galley carts 306. It is noted herein the shape of the cavity 114 (and thus the shape of the aircraft interior structure 104) combined with the arrangement of the passenger suites 102 and the aircraft interior structures 104 may be such in the aircraft cabin 100 such that only the addition of the extension section 400 may allow for the storing of large galley carts 304 in the cavity 114, in addition to the storing of small galley carts 306. Without the extension section 400, then, the cavity 114 may only be able to store the small galley carts 306.

It is noted herein the arrangement of the plurality of passenger suites 102 in the aircraft cabin 100 around a single separating aisle 108 should be understood as not being configured such that sections of the aircraft interior structure 104 protrudes in a space between across-aisle passenger suites 102. In addition, it is noted herein the arrangement of the plurality of passenger suites 102 in the aircraft cabin 100 around a single separating aisle 108 should be understood as not being configured such that the across-aisle passenger suites 102 protrudes into the space between sections of the aircraft interior structure 104.

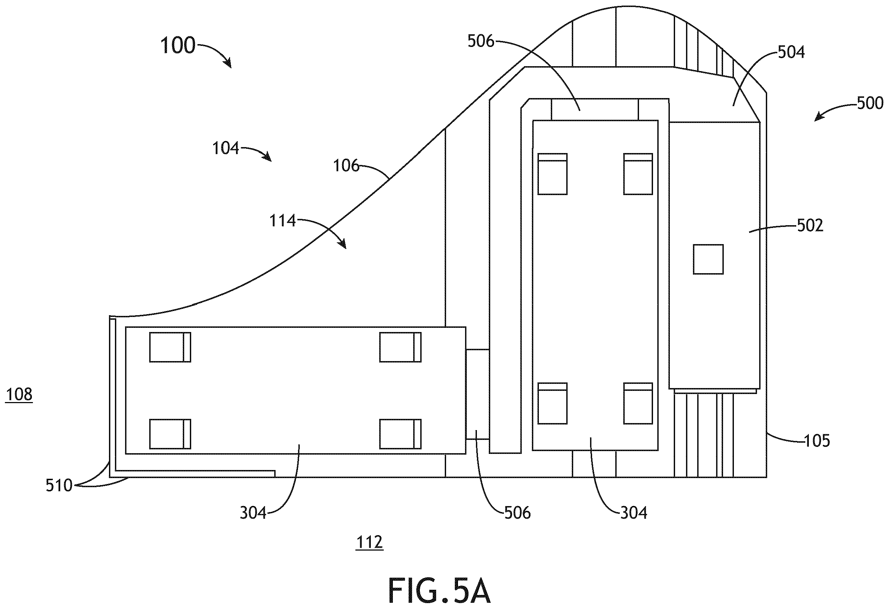

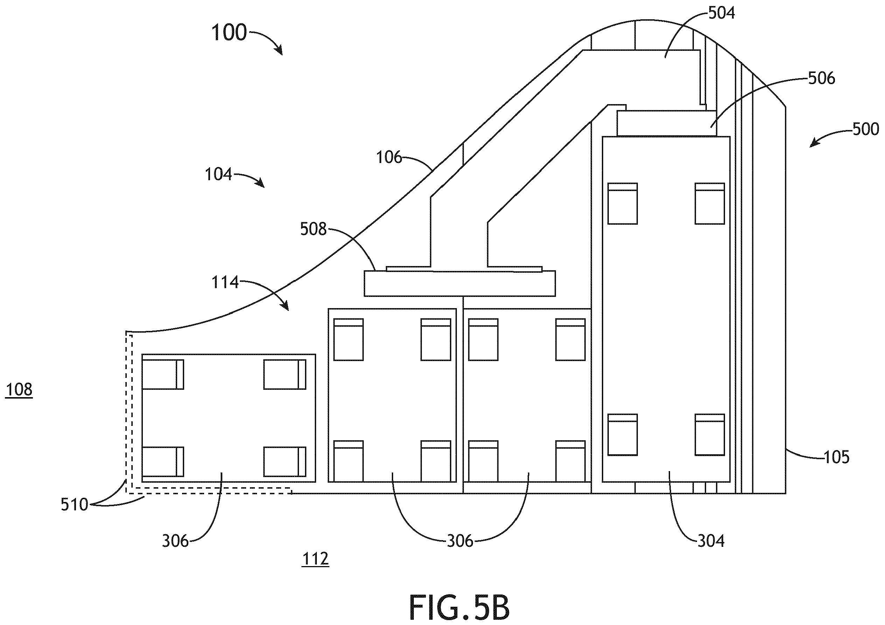

Referring now to at least FIGS. 5A and 5B, the aircraft interior structure 104 may include a chiller system 500. Some or all of the chiller system 500 may be installed in the cavity 114.

The chiller system 500 may include an air chiller 502. For example, the air chiller 502 may be positioned under the workdeck 300 and in the cavity 114. For instance, the air chiller 502 may be positioned beside a galley cart 302 in the cavity 114. In addition, the air chiller 502 may be positioned above or below the galley cart 302 in the cavity 114. By way of another example, the air chiller 502 may be positioned in a crown above the aircraft cabin 100. By way of another example, the air chiller 502 may be positioned under a floor of the aircraft cabin 100. In general, the air chiller 502 may be positioned anywhere within an aircraft including the aircraft cabin 100, to the extent aviation guidelines and standards are still met or exceeded.

The chiller system 500 may include ductwork 504 coupled (e.g., mechanically, fluidically, or the like) to the air chiller 502. The ductwork 504 may be routed in the cavity 114 to maximize remaining space for galley carts 302. For example, a portion of the ductwork 504 may be located where the depth of the cavity 114 is greater than a length of the one or more galley carts 302, such that the one or more galley carts 302 would not reach or interfere with the portion of the ductwork 504. By way of another example, a portion of the ductwork 504 may be positioned beside, above, and/or below the galley carts 302. In this regard, space within the cavity 114 otherwise left unused with the storing of the galley carts 302 may be repurposed as usable space including components of the chiller system 500.

Galley carts 302 stored within the cavity 114 may be oriented to accommodate the ductwork 504 (and other components of the chiller system 500). For example, at least some of the galley carts 302 may be inserted into the cavity 114 parallel (or substantially parallel) to the direction of travel of the aisle 108. By way of another example, at least some of the galley carts 302 may be inserted into the cavity 114 at an angle to the direction of travel of the aisle 108. For instance, at least some of the galley carts 302 may be inserted into the cavity 114 at an angle perpendicular (or substantially perpendicular) to the direction of travel of the aisle 108.

The aircraft interior structure 104 may include one or more doors 506 configured to separate the cavity 114 from the aircraft cabin 100 when closed. For example, the one or more doors 506 may separate the cavity 114 from the aisle 108. The galley carts 302 may be stored in the cavity 114 at an angle perpendicular or substantially perpendicular to the direction of travel in the aisle 108. To assist in removing galley carts 302 which are positioned within the cavity 114 at an angle perpendicular or substantially perpendicular to the direction of travel in the aisle 108, the aircraft interior structure 104 may include one or more doors 506 configured to open into the aisle 108. For example, a door 506 may include one or more interlocking assemblies configured to hold the door 506 shut during TTL stages of flight. The one or more interlocking assemblies may be self-latching/self-releasing, may be latched/released when a force is directly applied to the door 506 by the crew member, and/or may be latched/released through an external component (e.g., a switch, toggle, button, or the like) or assembly acted upon by the crew member. It is noted herein the one or more interlocking assemblies may be required to hold or secure the door 506 to withstand crash loads. In addition, the door 506 may include one or more hinge assemblies, linkage assemblies, actuation assemblies (e.g., rails, tracks, sliders, or the like) or other components configured to translate, rotate or pivot, and/or a combination to translate and rotate or pivot the door 506. In general, the one or more actuation assemblies may include any mechanism or device configured to meet aviation guidelines and/or standards. It is noted herein that where there are multiple doors 506, the multiple doors 506 may be interlocked and/or actuated as a single unit or independently

The chiller system 500 may include one or more ports 508 coupled (e.g., mechanically, fluidically, or the like) to the ductwork 504. For example, at least some of the one or more ports 508 may be positioned to feed chilled air through a corresponding galley cart 302 positioned proximate to the port 508.

The chiller system 500 may include one or more vents 510 coupled (e.g., mechanically, fluidically, or the like) to the ductwork 504. For example, at least some of the one or more vents 510 may be positioned to feed chilled air over at least some of the galley carts 302 stored in the cavity 114.

The one or more galley carts 302 may be positioned to accommodate the installation of the chiller system 500 in the cavity 114.

In one non-limiting example as illustrated in FIG. 5A, two large galley carts 304 may be stored in the cavity 114. The chiller system 500 may include two ports 508, where each port 508 is configured to pass chilled air through a corresponding large galley cart 304.

In another non-limiting example as illustrated in FIG. 5B, one large galley cart 304 and three small galley carts 306 may be stored in the cavity 114. The chiller system 500 may include a port 508 configured to pass chilled air through and/or a vent 510 configured to pass chilled air over the large galley cart 304. The chiller system 500 may include a vent 510 configured to pass chilled air over at least some of the small galley carts 306. For example, chilled air may be passed over all small galley carts 306. By way of another example, chilled air may be passed over two of the three small galley carts 306.

It is noted herein the above examples should not be interpreted as a limitation on the present disclosure but merely an illustration.

Although embodiments of the disclosure illustrate the storing of galley carts 302 in the cavity 114 defined within the aircraft interior structure 104, it is noted herein the cavity 114 may be operated as a storage compartment.

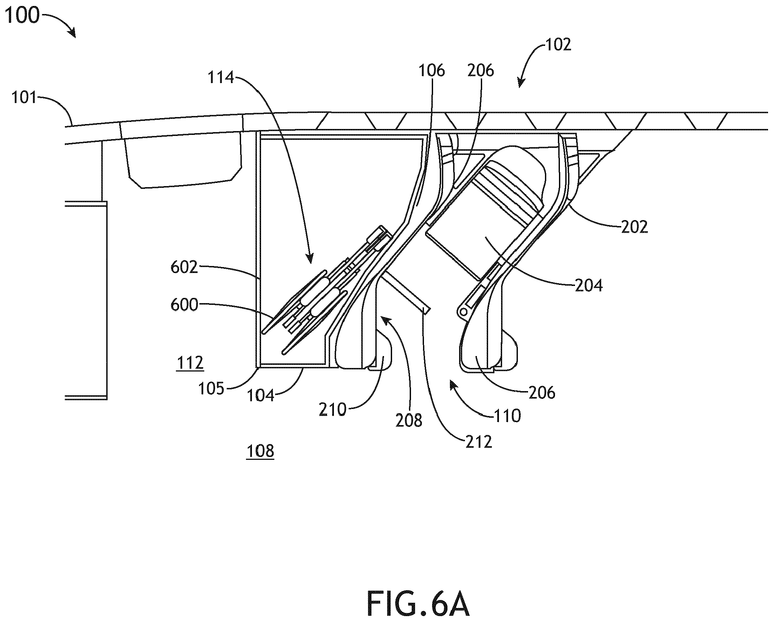

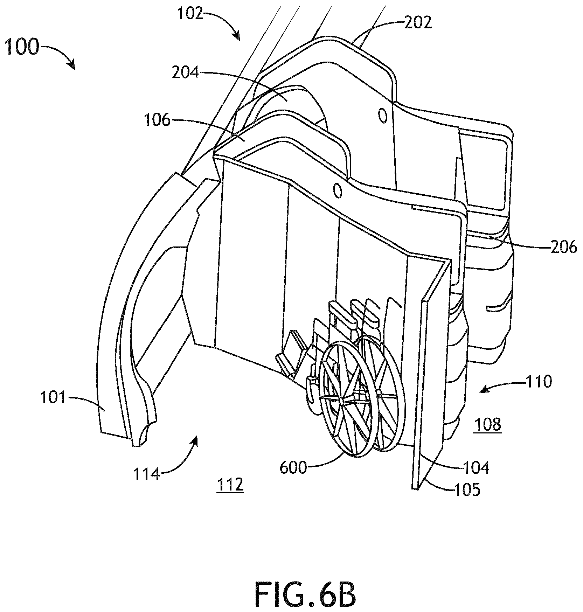

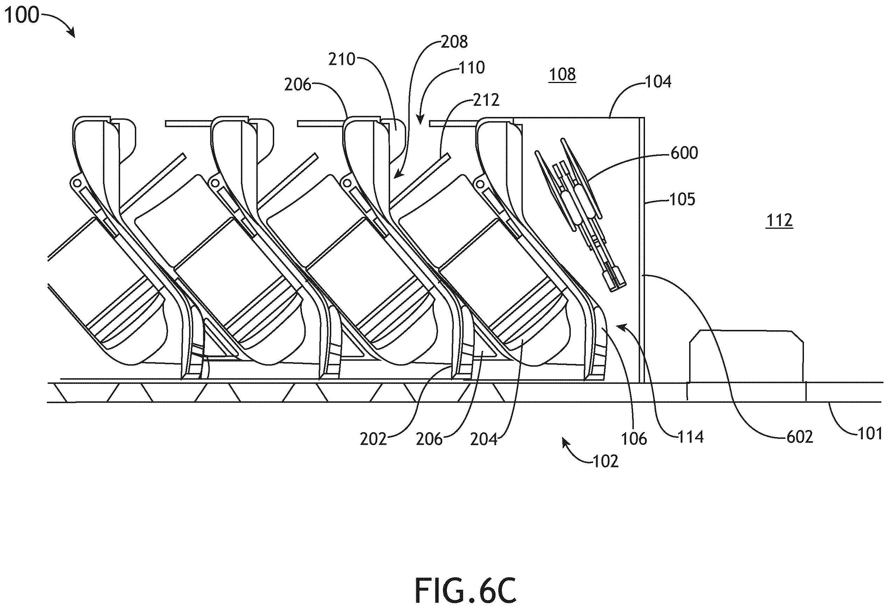

Referring now to at least FIGS. 6A and 6B, the cavity 114 may be configured to stow large items 600. For example, the large items 600 may include, but are not limited to, wheelchairs, bassinets 312, safety equipment such as floatation devices, or other large objects that may be not easily fit into the galley carts 302. By way of another example, the large items may include, but are not limited to, long and/or large items (e.g., crew member and/or passenger amenities needing to be hung (e.g., hangable items including, but not limited to, coats), carry-on luggage 314, or the like) that require an increased space and/or that a passenger may prefer to store in a substantially vertical or upright orientation. It is noted herein the aircraft interior structure 104 may have components included, but not limited to, a coat rod, shelving, sub-compartments (e.g., latching or non-latching), or the like installed in and/or couplable to assemblies installed in the cavity 114.

The aircraft interior structure 104 may include one or more doors 602 configured to separate the cavity 114 from the aircraft cabin 100 when closed. For example, the one or more doors 602 may separate the cavity 114 from the galley area 112. A door 602 may include one or more interlocking assemblies configured to hold the door 602 shut during TTL stages of flight. For example, the one or more interlocking assemblies may be self-latching/self-releasing, may be latched/released when a force is directly applied to the door 602 by the crew member, and/or may be latched/released through an external component (e.g., a switch, toggle, button, or the like) or assembly acted upon by the crew member. It is noted herein the one or more interlocking assemblies may be required to hold or secure the door 602 to withstand crash loads. The door 602 may include one or more hinge assemblies, linkage assemblies, actuation assemblies (e.g., rails, tracks, sliders, or the like) or other components configured to translate, rotate or pivot, and/or a combination to translate and rotate or pivot the door 602. In general, the one or more actuation assemblies may include any mechanism or device configured to meet aviation guidelines and/or standards. It is noted herein that where there are multiple doors 602, the multiple doors 602 may be interlocked and/or actuated as a single unit or independently.

It is noted herein the door 602 may be used to hold the one or more galley carts 302 within the cavity 114 during TTL stages of flight instead of or in addition to the one or more cart interlocking assemblies or mechanisms.

It is noted herein the aircraft cabin 100 may be configured only for storage of galley carts 302 in the cavity 114 of installed aircraft interior structures 104, only for storage of large items 600 in the cavity 114 of installed aircraft interior structures 104, or a storage of a combination of galley carts 302 and large items 600 in the cavity 114 of installed aircraft interior structures 104. In addition, it is noted here the cavity 114 of installed aircraft interior structures 104 may be configured for the storage of either galley carts 302 or large items 600, including being configured for the swapping of the galley carts 302 or large items 600 depending on need (e.g., as determined by crew members and/or other airline personnel).

In this regard, the unique trapezoidal shape of the cavity 114 / the aircraft interior structure 104 allows for the stowing of galley carts 304, 306 of various sizes, while taking advantage of the empty space resulting from the angling of the passenger suites 102.

Advantages of the present disclosure are directed to a trapezoidal cart stowage for aircraft. Advantages of the present disclosure are also directed to integrating the trapezoidal cart stowage with a portion of a passenger compartment or passenger suite installed within the aircraft cabin, where the integrating of various aircraft interior components may reduce required installation space, resulting in an increase of available floor space for other aircraft interior structures and/or monuments while continuing to meet aviation guidelines and/or standards. Advantages of the present disclosure are also directed to a chiller system within the trapezoidal cart stowage. Advantages of the present disclosure are also directed to stowage of large items within the trapezoidal cart stowage.

Although embodiments of the disclosure are directed to an aviation environment such as an aircraft cabin 100, it is noted herein the aircraft interior structure 104 is not limited to the aviation environment and/or the aircraft components within the aviation environment. For example, the aircraft interior structure 104 may be configured for any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. By way of another example, the aircraft interior structure 104 may be configured for commercial or industrial use in either a home or a business. Therefore, the above description should not be interpreted as a limitation on the present claims but merely an illustration.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An aircraft interior structure (104) for an aircraft cabin (100), comprising:
a main body (105) including a plurality of walls, at least one wall (202) of the plurality of walls being shared with an adjacent passenger suite (102) including an aircraft seat (204) configured to actuate between an upright position and a lie-flat position installed in the aircraft cabin, the passenger suite being installed at an angle relative to an aisle (108) of the aircraft cabin, the passenger suite being accessible via an opening to the aisle; and
a cavity (114) defined within the main body, the cavity being a trapezoidal shape defined at least in part by the angle at which the passenger suite is installed in the aircraft cabin,
the cavity being configured to receive a plurality of galley carts (306), a length of each of the plurality of galley carts being dependent on a depth of the cavity at respective locations in the trapezoidal shape where each of the plurality of galley carts is housed.

2. The aircraft interior structure of Claim 1, the plurality of galley carts including at least one large galley cart (304) with a first length configured to be inserted at a location in the cavity corresponding to a deep portion of the trapezoidal shape of the cavity, the plurality of galley carts including at least one small galley cart (306) with a second length configured to be inserted at a location in the cavity corresponding to a shallow portion of the trapezoidal shape of the cavity.

3. The aircraft interior structure of Claim 1, the at least one galley cart configured to be inserted into the cavity in a direction at least one of parallel to a direction of travel of the aisle, at an angle to the direction of travel of the aisle, or perpendicular to the direction of travel of the aisle.

4. The aircraft interior structure of any preceding Claim, the aircraft interior structure comprising one or more doors (506) configured to separate the cavity from the aircraft cabin.

5. The aircraft interior structure of Claim 4, the cavity being accessible via a galley area in the aircraft cabin, at least some of the plurality of galley carts being insertable into the cavity via the galley area, the one or more doors configured to separate the cavity from the galley area when closed.

6. The aircraft interior structure of Claim 4, the cavity being accessible via the aisle, at least some of the plurality of galley carts being insertable into the cavity via the aisle, the one or more doors configured to separate the cavity from the aisle when closed.

7. The aircraft interior structure of any preceding Claim, comprising a chiller system (500) at least partially installed within the cavity, the chiller system comprising an air chiller (502) coupled to ductwork (504).

8. The aircraft interior structure of Claim 7, the chiller system comprising one or more ports (508) coupled to the ductwork, the one or more ports configured to feed chilled air through at least some of the plurality of galley carts housed in the cavity.

9. The aircraft interior structure of Claim 7 or 8, the chiller system comprising one or more vents (510) coupled to the ductwork, the one or more vents configured to feed chilled air over at least some of the plurality of galley carts housed in the cavity.

10. The aircraft interior structure of any preceding Claim, the cavity configured to stow large items including wheelchairs, bassinets, safety equipment, hangable items, or luggage.

11. The aircraft interior structure of any preceding Claim, the aircraft interior structure including a workdeck (300) and a raised edge (308) proximate to the passenger suite, the raised edge being configured to allow a passenger to have access to the workdeck, the workdeck being configured to support at least one of a bassinet (312) or luggage (314) proximate to the passenger suite and the raised edge.

12. An aircraft cabin (100), comprising:
a passenger suite (102) including an aircraft seat (204) configured to actuate between an upright position and a lie-flat position, the passenger suite being installed at an angle relative to an aisle of the aircraft cabin, the passenger suite being accessible via an opening to the aisle (108); and
the aircraft interior structure (104) according to any preceding claim adjacent to the passenger suite.

13. The aircraft cabin of Claim 12, the aircraft interior structure being installed forward of the adjacent passenger suite, the at least one wall forming a forward surface of the adjacent passenger suite.

14. The aircraft cabin of Claim 12, the aircraft interior structure being installed aft of the adjacent passenger suite, the at least one wall forming a rearward surface of the adjacent passenger suite.

15. The aircraft cabin of any of Claims 12 to 14, comprising:
a second passenger suite including a second aircraft seat configured to actuate between a second upright position and a second lie-flat position, the second passenger suite being installed at a second angle relative to the aisle of the aircraft cabin, the second passenger suite being accessible via a second opening to the aisle; and
a second aircraft interior structure adjacent to the second passenger suite, the second aircraft interior structure comprising:
a second main body including a second plurality of walls, at least one wall of the second plurality of walls being shared with the adjacent second passenger suite; and
a second cavity defined within the second main body, the second cavity being a second trapezoidal shape defined at least in part by the angle at which the second passenger suite is installed in the aircraft cabin, the second cavity being configured to receive a second plurality of galley carts, a length of each of the second plurality of galley carts being dependent on a depth of the second cavity at respective locations in the second trapezoidal shape where each of the second plurality of galley carts is housed,
the passenger suite and the aircraft interior structure being on a first side of the aisle and the second passenger suite and the second aircraft interior structure being on a second side of the aisle,
the passenger suite and the second passenger suite being angled inward to the aisle.
